# EUROPEAN PATENT SPECIFICATION

(11) **EP 2 018 245 B1**
(45) Date of publication and mention of the grant of the patent: **21.07.2010**
(21) Application number: 06747546.7
(22) Date of filing: 16.05.2006
(51) Int. Cl.: B23P 15/00, F16G 5/16, B21D 53/14

(54) **MANUFACTURING METHOD FOR A LAMINATED SET OF METAL RINGS FOR A PUSHBELT AND PUSHBELT**
HERSTELLUNGSVERFAHREN FÜR EINEN LAMINIERTEN SATZ VON METALLRINGEN FÜR EINEN SCHUBRIEMEN UND SCHUBRIEMEN
PROCÉDÉ DE FABRICATION D'UN ENSEMBLE STRATIFIÉ DE BAGUES MÉTALLIQUES POUR UNE COURROIE DE POUSSÉE ET COURROIE DE POUSÉE

(43) Date of publication of application: 28.01.2009
(73) Proprietor: Robert Bosch GmbH, 70442 Stuttgart (DE)
(72) Inventor: PENNINGS, Bert, 5052 CH Goirle (NL)
(74) Representative: Plevier, Gabriel Anton Johan Maria
(86) International application number: PCT/NL2006/000251
(87) International publication number: WO 2007/133062

(56) References cited:
- EP-A- 0 964 184
- EP-A- 1 055 738
- EP-A- 1 243 812
- PATENT ABSTRACTS OF JAPAN vol. 011, no. 213 (M-605), 10 July 1987 (1987-07-10) -& JP 62 028548 A (KOBE STEEL LTD), 6 February 1987 (1987-02-06)
- PATENT ABSTRACTS OF JAPAN vol. 013, no. 028 (M-788), 23 January 1989 (1989-01-23) -& JP 63 238963 A (HITACHI LTD), 5 October 1988 (1988-10-05)

## Description

The present invention relates to a manufacturing method for a laminated set of rings for a pushbelt and to a pushbelt as defined by the preambles of claims 1 and 10 respectively.

The pushbelt as such is generally known in the art and is described in detail in, for example, EP-A 1 403 551. The belt is mainly used as a means for power transmission between two adjustable pulleys in the well-known continuously variable transmission that is applied in motor vehicles.

The known pushbelt is composed of a multitude of relatively thin transverse metal elements that are provided on one or more such laminated set(s) of radially stacked metal rings, slideably along the circumference thereof. These rings are usually produced from a precipitation hardening steel composition, such as a Maraging steel, that combines a/o the properties of great tensile strength and resistance against tensile and bending stress fatigue with a relatively favourable possibility to process it from raw base material towards the desired shape and properties of the rings.

In the typical manufacturing method for such a set of rings the following process steps are comprised:
- preparing an ingot of a metal composition desired as ring base material;
- cutting, forging and/or rolling the ingot into an elongated steel sheet having a minimal thickness in relation to its width and length dimensions;
- sheet material composition quality control
- separating a plate section from the steel sheet
- bending and welding the plate into a cylindrical shape or tube
- separating ring sections from the tube

Usually the thus formed rings are subjected to several further process steps, as is exemplified in, for instance, the European patent application EP-A 1 055 738, which is considered to represent the most relevant state of the art, to form the end product pushbelt ring component. Also as a part of the known manufacturing method, several such rings are mutually nested in radial direction, i.e. concentrically stacked, with a defined radial play being provided between adjacent rings to form each set of rings of the pushbelt.

It is a well known fact that the operational lifespan of the pushbelt is limited a/o by the ultimate fatigue fracture of one of the ring components thereof. Hereby, the fatigue strength of the rings is largely determined by the size and abundance of non-metallic inclusions such as metal oxides, -nitrides and -carbides that are embedded therein, because such inclusions work as internal stress raisers such that a (fatigue) crack can initiate at or near such inclusion even though the overall (average) stress load does not exceed the nominal fracture stress of the rings. Thus, by limiting the size and abundance of inclusions that are formed in its production process, the fatigue fracture of the ring components can be favourably delayed at a given load, improving the operation lifespan of the pushbelt as a whole. However, such improvement can generally be realised only at great cost and effort in the production process, which effectively limits the practically, i.e. economically, maximum attainable purity and associated fatigue strength of the rings. These principles have been discussed and are quantified in relation to the pushbelt ring component in a/o EP-A 1 243 812, which provides for a Maraging steel having a defined a non-metallic inclusion size distribution that shows a remarkable fatigue strength while still being economically producible.

The present invention aims to further improve on the fatigue strength, c.q. resistance against fatigue crack, of the pushbelt ring component without modifying the composition of the ring base material as such. According to the invention such aim is realised by a manufacturing method according to claim 1 and a pushbelt according to claim 10.

Underlying the present invention are measurements performed on the elongated steel sheet, which revealed that at least the number of inclusions per unit of volume, i.e. the local relative abundance of inclusions or local inclusion density, varies along the width of the steel sheet, i.e. in a direction transversely to the rolling direction of the preceding process step of rolling. In particular it was observed that at or near the lateral side edges of the steel sheet the inclusion density is highest as compared to a central part or parts of the sheet extending between the lateral edges thereof.

Based on the above insight, it is presently suggested to at least produce the radially innermost ring of the set of rings from such central part(s) of the sheet. This innermost ring typically being the most heavily fatigue loaded ring in the set of rings during operation of the pushbelt. Preferably also the radially outermost ring of the set of rings is produced from such central part(s) of the sheet, since also this ring is loaded more during operation as compared to so-called in-between rings, i.e. rings of the set rings that are positioned in-between the radially innermost and the radially outermost ring thereof.

Further, it is suggested to either discard the said lateral side edges of the steel sheet from the manufacturing process altogether, or to use the material concerned solely for the production of at least one of the said in-between rings. If it is chosen to discard these lateral side edges, the material concerned can be recycled, i.e. be added to the molten steel composition from which the ingot of the ring base material is prepared in the first process step of the present manufacturing method. In the later case, the removal of a strip of material of more than 2%, preferably up to 6% of the total, i.e. overall width of the steel sheet -or of the length of the tube to be formed there from- at each lateral side edge thereof suffices to realise a noticeable improvement, i.e. reduction, in the maximum inclusion density in the rings. The above values amount to the width of 1 to 3 ring sections of approximately 10 mm to be separated from the tube ends and subsequently discarded of a typical tube having a length of approximately 0.5 m.

In a preferred embodiment of the invention at least the said radially innermost ring, but preferably also the said radially outermost ring is separated from the tube at a position that is removed from its axial ends, preferably by at least 10% of its total length, which tube length corresponds to the width of the steel sheet and plate sections, more preferably by 25% of its length. It was found that typically already in the central 80% part, but with great certainty in the central 50% part of the total width of the sheet 11, c.q. of the tube length, the inclusion density is considerably lower than at or near the lateral side edges of the sheet, c.q. the plate section, c.q. the tube, and, moreover, that along the said central part the inclusion density is comparatively constant.

The above-described basic features of the invention will now be elucidated by way of example, along a drawing in which:
Figure 1 is a schematic illustration of the pushbelt the present invention relates to and of the transmission in which such belt is applied;
Figure 2 is an illustration of the manner in which a laminated tensile means and a transverse element are mutually oriented within the pushbelt;
Figure 3 figuratively represents the presently relevant process steps in the known method for manufacturing a laminated set of rings for a pushbelt; and
Figure 4 provides a graph that was obtained by performing several inclusion density measurements on a steel sheet used in the known manufacturing method.

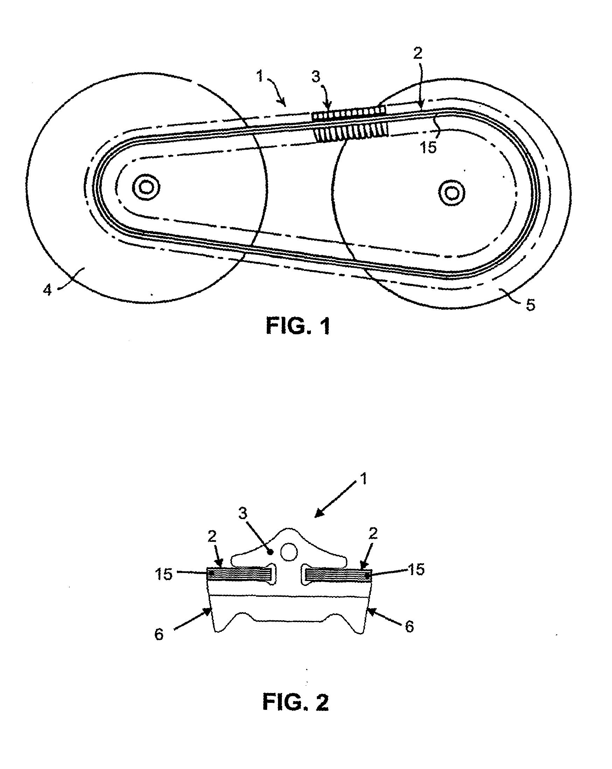

Figure 1 shows schematically a continuously variable transmission (CVT) with a drive belt 1 wrapped around two pulleys 4 and 5, which belt 1 is made up of two sets 2 of mutually stacked, thin metal rings 15 and an essentially continuous array of transverse elements 3 that are mounted along the circumference of the laminated ring sets 2 and which may freely slide there along. This type of drive belt 1 is commonly referred to as pushbelt 1. Both the pushbelt 1 and the continuously variable transmission as a whole are well known per se.

Figure 2 depicts, in a longitudinal cross-section of the belt 1, a front view of a transverse element 3 and a cross section of the ring sets 2. The transverse element 3 laterally shows side faces 6 by which it engages the conical sheaves of the transmission pulleys 4, 5. The rings 15 are made of a high quality steel, e.g. a nitrided and precipitation hardened Maraging steel, and typically have a thickness of about 0.18 mm, a width of about 10 mm and a circumference length of around 500 to 750 mm. It is known that the fatigue strength of the rings 15 is of primary importance to the performance of the pushbelt as a whole, which fatigue strength is largely determined by the size and abundance of non-metallic inclusions, such as metal oxides, -nitrides and -carbides present in the rings. Thus, in practice the rings are produced not only in accordance with a narrowly specified material composition, but also with a well defined non-metallic inclusion size distribution. For the presently applied Maraging steel this means that at least the number of Titanium-nitride inclusions per unit of volume must be less than a predefined upper tolerance limit therefor. In a more sophisticated approach, it is known to also take account of the size of the inclusions, such that the upper tolerance limit is higher as the inclusion size is smaller, and/or other types of inclusions, such as metal-oxide and carbide particles.

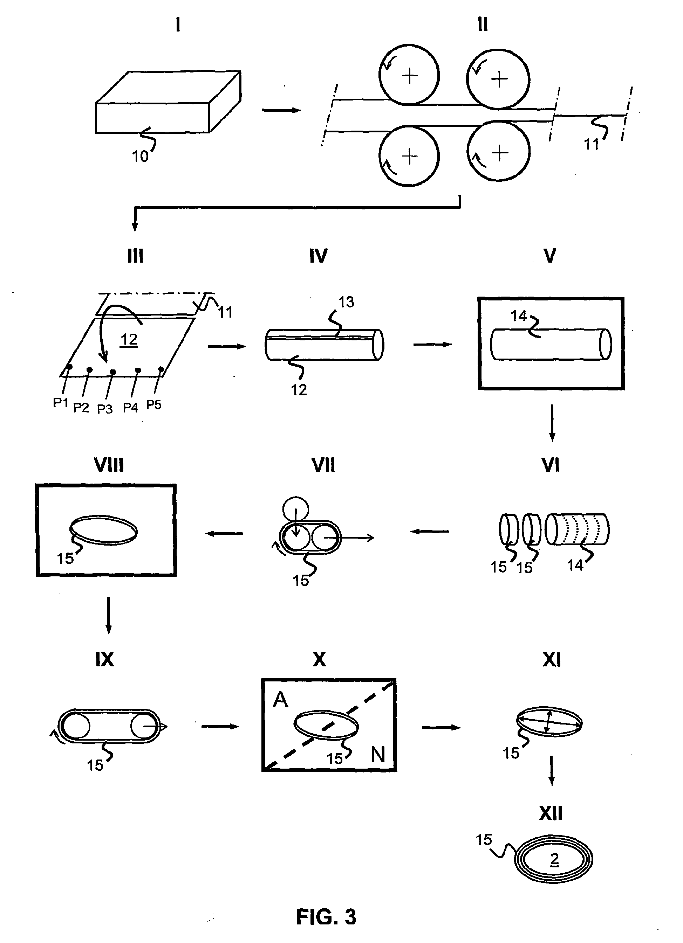

In the figure 3, the separate process steps of the manufacturing method for a laminated ring set 2 for a pushbelt 1 are schematically indicated, identified by way of Roman numerals.

In a first process step I an ingot 10 is made from a molten steel alloy of desired composition. This ingot is subsequently, in a second process step II, cut, forged and rolled into an elongated steel sheet 11 having a minimal thickness in relation to its width and length dimensions. For ease of transport, the steel sheet 11 is often coiled up lengthwise into a spiral shape (not shown). Thereafter, in a third process step III a plate section 12 is separated from the -uncoiled- steel sheet 11, which plate section 12 is subsequently bent into a cylindrical shape and the adjoining plate ends 13 are welded together in a fourth process step IV to form a tube 14. In a fifth process step V the tube 14 is annealed. Then, in a sixth process step VI the tube 14 is separated into a number of annular hoops or rings 15, which are subsequently -process step seven VII- rolled and elongated to a required length and/or thickness. The rings 15 are subjected to a further annealing process step VIII to remove the internal stresses introduced during rolling and in a ninth process step IX, the rings 15 are calibrated, i.e. they are mounted around two rotating rollers and stretched to a predefined circumference length of the end product. In a subsequent tenth process step X the rings 15 undergo a heat treatment. Usually, the heat treatment includes at least two phases: in the first phase the rings 15 are precipitation hardened, i.e. aged, (indicated by the letter "A") and, in the second phase, the rings 15 are nitrided (indicated by the letter "N"), to provide additional hardness as well as a compressive stress to the outer surface layer of the rings 15.

Usually, the quality of the sheet material composition is checked, as part of the above manufacturing method, by measuring the number of non-metallic inclusions, at least Titanium-nitride inclusions, embedded in a material sample of defined volume in relation to their size. Such inclusion size distribution being predictive of the ultimate fatigue strength of the pushbelt 1 and should therefore satisfy specified requirements.

From a number of thus processed rings 15 the ring set 2 is formed by radially stacking, i.e. nesting, a number of purposely selected rings 15, as is further indicated in figure 3. To obtain the required number of rings 15 suited for forming one set 2, a representative dimension of each processed ring 15, e.g. its circumference length, is measured in an eleventh process step XI, wherein the rings 15 are classified and stocked by such length. Subsequently, in a twelfth and final process step XII the set 2 of rings 15 is assembled by mutually nesting a required number of suitably dimensioned rings 15 from such stock of classified rings 15.

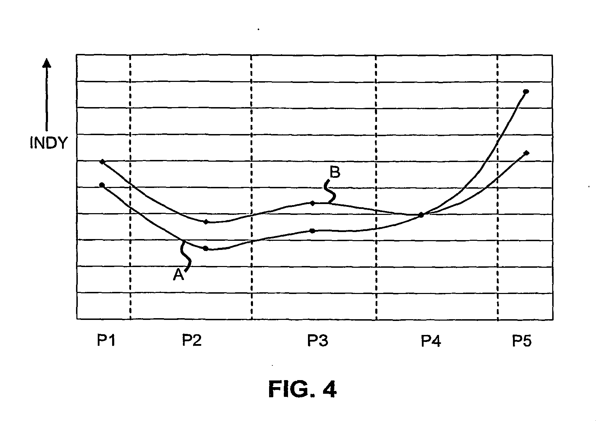

Departing from the above known manufacturing method the present invention aims to further improve on the fatigue strength, c.q. resistance against fatigue crack, of the pushbelt ring component 15, without modifying the ring material composition as such. Thereto, it is relied on the presently revealed variation of the number of Titanium-nitride inclusions per unit of volume along the width of the steel sheet 11, i.e. in a direction transversely to the rolling direction, after the said second process step II has been concluded, which variation is illustrated in the graph of figure 4.

In figure 4 both curves A and B, each representing a different location along the length of the steel sheet 11, connect the number of Titanium-nitride inclusions per unit of volume, hereinafter denoted inclusion density INDY, as measured at five separate positions P1-P5 along the width of the steel sheet 11, respectively of the plate section 12 separated there from, which positions are indicated by way of illustration in figure 3, process step III. Positions P1 and P5 are placed near the respective lateral (i.e. left and right) edges of the sheet 11 or plate section 12, i.e. removed from the respective lateral edge by approximately 2% of the total width of the sheet 11, whereas position P3 is placed essentially at its midpoint. Positions 2 and 4 are placed essentially halfway a respective lateral edge P1, P5 of the sheet 11 and its midpoint P3, i.e. essentially at ¼ and ¾ of its total width.

From figure 4 it appears that, as seen along the width of the steel sheet 11, the highest inclusion density INDY occurs near its lateral side edges, i.e. at positions P1 and P5. In the central part of the sheet 11, i.e. at positions P2, P3 and P4, such inclusion density INDY was consequently (i.e. reproducibly) found to be lower by a considerable margin relative to the inclusion density INDY at the local side edges. Between these latter three positions P2-P4, located at the central part of the sheet 11, the inclusion density INDY varies relatively little, but no special, reproducible relationship appears to exist there between in terms of the inclusion density INDY.

Based on the above phenomenon and in accordance with the present invention, it is considered advantageous to at least produce the radially innermost ring 15 of each the ring set 2 from such central part P2-P4 of the steel sheet 11, c.q. the plate section 12, c.q. the tube 14, since such innermost ring 15 typically is the most heavily loaded. Preferably also the radially outermost ring 15 of each ring set 2 is produced from the central part P2-P4 of the sheet 11, c.q. the plate section 12, since also this outermost ring 15 is loaded more during operation as compared to the so-called in-between rings 15 of the set 2 that are positioned in-between the said radially innermost and outermost rings 15 thereof.

In a preferred embodiment of the invention at least the said radially innermost ring 15, but preferably also the said radially outermost ring 15 is separated from the tube 14 at a position that is removed from its axial ends by at least 10% of its total length, which tube length corresponds to the width of the steel sheet 11 and plate section 12, preferably by more than 25% of its length.

More in particular, according to the present invention, the said lateral side edges P1 and P5 of the steel sheet 11 are either discarded from the manufacturing process altogether, or the material concerned is used solely for the production of the said in-between rings 15.

## Claims

1. Method for manufacturing a laminated set (2) of metal rings (15) for a pushbelt (1) that comprises at least one such ring set (2) and a multitude of transverse metal elements (3) slideably incorporated on the ring set (2), which method includes the process steps of:
- separating a plate section (12) from an elongated steel sheet (11), a lengthwise oriented central part (P2-P4) of the steel sheet (11) being defined in-between lateral side edges (P1; P5) thereof,
- bending the plate section (12) and welding adjoining ends (13) of the bend plate section (12) to form a tube (14),
- separating rings (15) from the tube (14), and of
- radially nesting a number of rings (15) to form the ring set (2),
**characterised in that** the radially innermost ring (15) of the ring set (2) is produced from material located at the central part (P2-P4) of the steel sheet (11).

2. Ring manufacturing method according to claim 1, **characterised in that** the radially innermost ring (15) of the ring set (2) is produced from essentially the midpoint (P3) of the steel sheet (11).

3. Ring manufacturing method according to claim 1 or 2, **characterised in that** also the radially outermost ring (15) of the ring set (2) is produced from the central part (P2-P4) of the steel sheet (11).

4. Ring manufacturing method according to claim 1, 2 or 3, **characterised in that** the lateral side edges (P1; P5) of the steel sheet (11) are discarded from the manufacturing process, i.e. that the material concerned is not used for producing the rings (15).

5. Ring manufacturing method according to claim 1, 2 or 3, **characterised in that** at least one of the rings (15) of the ring set (2) located between the radially outermost and the radially innermost ring (15) thereof is produced from one of the lateral side edges (P1; P5) of the steel sheet (11).

6. Ring manufacturing method according to any of the preceding claims, **characterised in that** the lateral side edges (P1; P5) of the steel sheet (11) are defined to have a width of more than 2%, preferably more than 6%, more preferably more than 10%, and less than 25% of the total width of the steel sheet (11).

7. Ring manufacturing method according to any of the preceding claims, wherein the steel sheet (11) has been formed by cutting, forging and/or rolling of an ingot of a base material for producing the rings (15).

8. Ring manufacturing method according to any of the preceding claims, wherein the steel sheet (11) is provided with a minimal thickness in relation to its width and length dimensions.

9. Ring manufacturing method according to any of the preceding claims, which method further includes processing the rings (15) that are separated from the tube (14) to obtain the dimensions and material characteristics required for their use as a ring component (15) of the pushbelt (1).

10. Pushbelt (1) provided with a laminated set of radially stacked metal rings (2) that are produced in accordance with a ring manufacturing method according to any one of the preceding claims, from a desired material composition with non-metallic inclusions therein, **characterised in that** the number of inclusions per unit of volume in the radially innermost ring (15) of the ring set (2) is lower than in the in-between rings (15) of the ring set (2) that are positioned in between the radially innermost ring (15) and a radially outermost ring (15) thereof.

## Patentansprüche

1. Verfahren zur Herstellung eines laminierten Satzes (2) von Metallringen (15) für einen Schubriemen (1), der mindestens einen solchen Ringsatz (2) und eine Vielzahl von Quermetallelementen (3), die verschiebbar an dem Ringsatz (2) enthalten sind, umfasst, wobei das Verfahren die folgenden Prozessschritte umfasst:
- Trennen eines Blechabschnitts (12) von einem länglichen Stahlblech (11), wobei ein in Längsrichtung ausgerichteter mittlerer Teil (P2 - P4) des Stahlblechs (11) zwischen lateralen Seitenrändern (P1; P5) davon definiert ist,
- Biegen des Blechabschnitts (12) und Verschweißen der aneinander angrenzenden Enden (13) des gebogenen Blechabschnitts (12) zur Bildung eines Rohrs (14),
- Trennen von Ringen (15) von dem Rohr (14) und
- radiales Verschachteln mehrerer Ringe (15) zur Bildung eines Ringsatzes (2),
**dadurch gekennzeichnet, dass** der radial am weitesten innen liegende Ring (15) des Ringsatzes (2) aus Material hergestellt wird, das sich am mittleren Teil (P2 - P4) des Stahlblechs (11) befindet.

2. Ringherstellungsverfahren nach Anspruch 1, **dadurch gekennzeichnet, dass** der radial am weitesten innen liegende Ring (15) des Ringsatzes (2) aus im Wesentlichen dem Mittelpunkt (P3) des Stahlblechs (11) hergestellt wird.

3. Ringherstellungsverfahren nach Anspruch 1 oder 2, **dadurch gekennzeichnet, dass** der radial am weitesten außen liegende Ring (15) des Ringsatzes (2) aus dem mittleren Teil (P2 - P4) des Stahlblechs (11) hergestellt wird.

4. Ringherstellungsverfahren nach Anspruch 1, 2 oder 3, **dadurch gekennzeichnet, dass** die lateralen Seitenränder (P1; P5) des Stahlblechs (11) von dem Herstellungsprozess entsorgt werden, das heißt, das betreffende Material wird nicht zur Herstellung der Ringe (15) verwendet.

5. Ringherstellungsverfahren nach Anspruch 1, 2 oder 3, **dadurch gekennzeichnet, dass** mindestens einer der Ringe (15) des Ringsatzes (2), der zwischen dem radial am weitesten außen liegenden und dem radial am weitesten innen liegenden Ring (15) positioniert ist, aus einem der lateralen Seitenränder (P1; P5) des Stahlblechs (11) hergestellt wird.

6. Ringherstellungsverfahren nach einem der vorhergehenden Ansprüche, **dadurch gekennzeichnet, dass** die lateralen Seitenränder (P1; P5) des Stahlblechs (11) so definiert sind, dass sie eine Breite von mehr als 2%, vorzugsweise mehr als 6%, besonders bevorzugt mehr als 10% und weniger als 25%, der Gesamtbreite des Stahlblechs (11) aufweisen.

7. Ringherstellungsverfahren nach einem der vorhergehenden Ansprüche, wobei das Stahlblech (11) durch Schneiden, Schmieden und/oder Walzen eines Blocks aus einem Basismaterial zur Herstellung der Ringe (15) geformt worden ist.

8. Ringherstellungsverfahren nach einem der vorhergehenden Ansprüche, wobei das Stahlblech (11) mit einer Mindestdicke bezüglich seiner Breiten- und Längenabmessung vorgesehen ist.

9. Ringherstellungsverfahren nach einem der vorhergehenden Ansprüche, wobei das Verfahren weiterhin Bearbeiten der von dem Rohr (14) getrennten Ringe (15) zum Erhalt der Abmessungen und Materialeigenschaften, die für ihre Verwendung als eine Ringkomponente (15) des Schubriemens (1) erforderlich sind, umfasst.

10. Schubriemen (1), der mit einem laminierten Satz von radial gestapelten Metallringen (2) versehen ist, die gemäß einem Ringherstellungsverfahren nach einem der vorhergehenden Ansprüche aus einer gewünschten Materialzusammensetzung mit nicht metallischen Einschlüssen darin hergestellt sind, **dadurch gekennzeichnet, dass** die Anzahl von Einschlüssen pro Volumeneinheit in dem radial am weitesten innen liegenden Ring (15) des Ringsatzes (2) niedriger ist als bei den zwischen-Ringen (15) des Ringsatzes (2), die zwischen dem radial am weitesten innen liegenden Ring (15) und einem radial am weitesten außen liegenden Ring (15) davon positioniert sind.

## Revendications

1. Procédé de fabrication d'un ensemble stratifié (2) de bagues métalliques (15) pour une courroie de poussée (1) qui comprend au moins un tel ensemble de bagues (2) et une multitude d'éléments métalliques transversaux (3) incorporés de manière à pouvoir coulisser sur l'ensemble de bagues (2), lequel procédé comprend les étapes consistant à :
- séparer une section de plaque (12) d'une tôle d'acier allongée (11), une partie centrale orientée longitudinalement (P2-P4) de la tôle d'acier (11) étant définie entre des bords latéraux (P1 ; P5) de celle-ci,
- courber la section de plaque (12) et souder des extrémités adjacentes (13) de la section de plaque courbée (12) pour former un tube (14),
- séparer les bagues (15) du tube (14), et
- emboîter radialement un certain nombre de bagues (15) pour former l'ensemble de bagues (2),
**caractérisé en ce que** la bague la plus interne radialement (15) de l'ensemble de bagues (2) est produite à partir de matériau situé dans la partie centrale (P2-P4) de la tôle d'acier (11).

2. Procédé de fabrication de bagues selon la revendication 1, **caractérisé en ce que** la bague la plus interne radialement (15) de l'ensemble de bagues (2) est produite essentiellement à partir du centre (P3) de la tôle d'acier (11).

3. Procédé de fabrication de bagues selon la revendication 1 ou 2, **caractérisé en ce que** la bague la plus externe radialement (15) de l'ensemble de bagues (2) est aussi produite à partir de la partie centrale (P2-P4) de la tôle d'acier (11).

4. Procédé de fabrication de bagues selon la revendication 1, 2 ou 3, **caractérisé en ce que** les bords latéraux (P1 ; P5) de la tôle d'acier (11) sont rejetés du processus de fabrication, c'est-à-dire que le matériau en question n'est pas utilisé pour produire les bagues (15).

5. Procédé de fabrication de bagues selon la revendication 1, 2, ou 3, **caractérisé en ce qu'**au moins l'une des bagues (15) de l'ensemble de bagues (2) située entre la bague la plus externe radialement et la bague la plus interne radialement (15) de cet ensemble est produite à partir de l'un des bords latéraux (P1 ; P5) de la tôle d'acier (11).

6. Procédé de fabrication de bagues selon l'une quelconque des revendications précédentes, **caractérisé en ce que** les bords latéraux (P1 ; P5) de la tôle d'acier (11) sont définis de manière à avoir une largeur supérieure à 2%, de préférence supérieure à 6%, plus préférablement supérieure à 10%, et inférieure à 25% de la largeur totale de la tôle d'acier (11).

7. Procédé de fabrication de bagues selon l'une quelconque des revendications précédentes, dans lequel la tôle d'acier (11) est formée par découpage, forgeage et/ou laminage d'un lingot de matériau de base en vue de produire les bagues (15).

8. Procédé de fabrication de bagues selon l'une quelconque des revendications précédentes, dans lequel la tôle d'acier (11) est pourvue d'une épaisseur minimale par rapport à ses dimensions en largeur et en longueur.

9. Procédé de fabrication de bagues selon l'une quelconque des revendications précédentes, ledit procédé comportant en outre le traitement des bagues (15) qui sont séparées du tube (14) afin d'obtenir les dimensions et les caractéristiques de matériau requises pour leur utilisation en tant que composant annulaire (15) de la courroie de poussée (1).

10. Courroie de poussée (1) pourvue d'un ensemble stratifié de bagues métalliques empilées radialement (2) qui sont produites conformément à un procédé -de fabrication de bagues selon l'une quelconque des revendications précédentes, à partir d'une composition de matériau souhaitée avec des inclusions non métalliques dans celle-ci, **caractérisée en ce que** le nombre d'inclusions par unité de volume dans la bague la plus interne radialement (15) de l'ensemble de bagues (2) est inférieur au nombre d'inclusions par unité de volume dans les bagues intermédiaires (15) de l'ensemble de bagues (2) qui sont positionnées entre la bague la plus interne radialement (15) et une bague la plus externe radialement (15) de cet ensemble de bagues.
